# EUROPÄISCHE PATENTSCHRIFT

(11) **EP 2 734 649 B1**
(45) Veröffentlichungstag und Bekanntmachung des Hinweises auf die Patenterteilung: **25.05.2016**
(21) Anmeldenummer: 12727848.9
(22) Anmeldetag: 13.06.2012
(51) Int. Cl.: C21B 7/16, C21B 13/00, F27B 1/16, C21B 13/14

(54) **SCHMELZREDUKTIONSAGGREGAT UND VERFAHREN ZUM BETRIEB EINES SCHMELZREDUKTIONSAGGREGATS**
MELTING REDUCTION ASSEMBLY AND METHOD FOR OPERATING A MELTING REDUCTION ASSEMBLY
ENSEMBLE DE RÉDUCTION PAR FUSION ET PROCÉDÉ PERMETTANT DE FAIRE FONCTIONNER UN ENSEMBLE DE RÉDUCTION PAR FUSION

(30) Priorität: 21.07.2011 AT 10712011
(43) Veröffentlichungstag der Anmeldung: 28.05.2014
(73) Patentinhaber: Primetals Technologies Austria GmbH, 4031 Linz (AT)
(72) Erfinder: BERNER, Franz, A-4481 Asten (AT); PLAUL, Jan-Friedemann, A-4020 Linz (AT); WIEDER, Kurt, A-4311 Schwertberg (AT); WURM, Johann, A-4283 Bad Zell (AT)
(74) Vertreter: Metals@Linz
(86) Internationale Anmeldenummer: PCT/EP2012/061159
(87) Internationale Veröffentlichungsnummer: WO 2013/010725

(56) Entgegenhaltungen:
- EP-A1- 0 297 167
- WO-A1-99/04045
- DE-U1-202010 008 866
- JP-A- 63 153 208

## Beschreibung

### GEBIET DER ERFINDUNG

Die Erfindung betrifft ein Schmelzreduktionsaggregat mit Chargiervorrichtungen für feste Kohlenstoffträger, wie stückige Kohle, und eisenhaltige Einsatzstoffe, wie teil- und/oder fertigreduziertem Eisenschwamm, mit einer Einschmelzvergasungszone, welche ein von den festen Kohlenstoffträgern und den eisenhältigen Einsatzstoffen gebildetes Festbett enthält, mit einem unteren Abschnitt zur Aufnahme von flüssigem Roheisen bzw. Stahlvormaterial und flüssiger Schlacke, mit einem Abstich für flüssige Schlacke und flüssiges Roheisen, mit einer Vielzahl von Sauerstoffdüsen, welche im Mantel des Schmelzreduktionsaggregats angeordnet sind, mit Versorgungsleitungen zur Zufuhr von Sauerstoff zu den Sauerstoffdüsen, insbesondere einer Ringleitung, welche den Mantel des Schmelzreduktionsaggregats ringförmig umgibt und aus welcher über Gasleitungen sauerstoffhältiges Gas den Sauerstoffdüsen zuführbar ist.

Die Erfindung betrifft weiters ein Verfahren zum Betrieb eines Schmelzreduktionsaggregats.

### STAND DER TECHNIK

Aus dem Stand der Technik, wie z.B. der WO 01/14599 und EP0297167 ist es bekannt, eine Vielzahl von Sauerstoffdüsen am Umfang eines Schmelzreduktionsaggregats anzuordnen. Damit gelingt es in einem aus festen Kohlenstoffträgern und eisenhältigen Einsatzstoffen gebildeten Festbett ein CO- und H₂-hältiges Reduktionsgas im Schmelzreduktionsaggregat zu bilden. Bei dieser Art der Anordnung der Sauerstoffdüsen ist jedoch die Anzahl der Sauerstoffdüsen und damit die maximale erzielbare Schmelzleistung bzw. Roheisenproduktionsmenge beschränkt.

Bei Schmelzreduktionsverfahren, wie. Z.B. COREX und FINEX, die ein Schmelzreduktionsaggregat aufweisen, insbesondere einen Einschmelzvergaser, sind Sauerstoffdüsen am Umfang zwischen Herd und Char bed (Festbett, Kohlebett) installiert, um den Sauerstoff für die Vergasung von Kohlenstoff zur Herstellung des Reduktionsgases und zur Bereitstellung der erforderlichen Energie möglichst gleichmäßig am Umfang einzublasen. Zusätzlich ist es bekannt auch Feinkohle über die Sauerstoffdüsen einzublasen, um den Kohleverbrauch - im speziellen den Stückkohle- bzw. Brikettsverbrauch - zu verringern.

Betriebsergebnisse haben gezeigt, dass der Schmelzleistung je Sauerstoffdüse Grenzen gesetzt sind, da sowohl zuviel Gas als auch zuviel entstehendes flüssiges Roheisen und flüssige Schlacke eine unzureichende Permeabilität vor und/oder unterhalb und/oder oberhalb der Sauerstoffdüsenebene bewirken können. Daraus ergeben sich höhere Anforderungen an die eingesetzten Rohstoffe, damit dennoch eine entsprechende Festbettstabilität erzielt bzw. sichergestellt werden kann. Eine weitere Folge ist eine Limitierung der Feinkohleeindüsung, da diese Maßnahme ebenfalls permeabilitätsreduzierend wirken kann, sodass Prozessstörungen, wie z.B. eine Limitierung der Leistung oder auch Qualitätsschwankungen die Folge sein können. Weiters kann es bei mangelnder Drainage der flüssigen Phasen (z.B. Roheisen, Schlacke) auch zu Düsenschäden kommen.

Bisherige Betriebsergebnisse derartiger Anlagen zeigen, dass ein Zusammenhang zwischen der Häufigkeit von Düsenschäden und der Schmelzleistung je Düse wahrscheinlich ist. Weiters zeigte sich, dass die einblasbare Feinkohlemenge je Düse limitiert ist.

Verschiedene Lösungsansätze haben sich mit der Variationen der Düsengeometrien beschäftigt. Dennoch waren die Ergebnisse bisher nicht zufriedenstellend, insbesondere bei Anlagen mit höheren Roheisenproduktionsmengen.

Weiters gibt es Entwicklungsvorhaben, die eine größere Roheisenproduktionsmenge zum Ziel haben. Bisher bekannte Anordnungen der Sauerstoffdüsen in einer Düsenebene und am Umfang eines Schmelzreduktionsaggregats führen auf Grund der Größe der Düsenträger und der erforderlichen Blechstärken des Vergaserblechmantels zwischen den Düsenträgern zu einer zu geringen Anzahl an Sauerstoffdüsen und damit zu Anlagen mit Leistungseinschränkungen, bzw. zu Prozessstörungen und geringer Verfügbarkeit aufgrund von Düsenstörungen.

Zudem ist eine Leistungssteigerung beim Schmelzreduktionsaggregat durch eine Erhöhung der Herdfläche, also des inneren Querschnittes des Schmelzreduktionsaggregats, erzielbar, wobei der Umfang nicht in gleichem Maße zunimmt, sodass sich auch in dieser Hinsicht Einschränkungen ergeben.

### DARSTELLUNG DER ERFINDUNG

Es ist daher eine Aufgabe der Erfindung, ein Schmelzreduktionsaggregat und ein Verfahren zum Betrieb eines Schmelzreduktionsaggregats anzugeben, das eine höhere Roheisenproduktion bei gleichzeitig sicherem Betrieb ermöglicht.

Die Aufgabe wird erfindungsgemäß durch den kennzeichnenden Teil von Anspruch 1 gelöst, durch eine Vielzahl von Sauerstoffdüsen, die in zumindest zwei voneinander, insbesondere in vertikaler Richtung, beabstandeten und parallel zueinander angeordneten Düsenebenen und horizontal verteilt über den Umfang des Mantels des Schmelzreduktionsaggregats angeordnet sind. Zudem sind die Düsen unterschiedlicher Düsenebenen jeweils versetzt zueinander angeordnet sind. Die Sauerstoffdüsen können zum Eintrag von technisch reinem Sauerstoff oder auch von sauerstoffreichen Gasen, wie z.B. mit Sauerstoff angereicherter Luft genutzt werden.

Schmelzreduktionsaggregate dienen der Herstellung von flüssigem Roheisen oder von flüssigen Stahlvorprodukten. Aus den eisenhaltigen Einsatzstoffen und Kohle, Koks werden die eisenhaltigen Einsatzstoffe zu Roheisen reduziert und erschmolzen. Dies erfolgt in einem aus der Kohle oder dem Koks und den eisenhaltigen Einsatzstoffen gebildeten Festbett. Als Schmelzreduktionsaggregate sind hierzu Einschmelzvergaser bekannt. Ebenso kann auch ein Hochofen, insbesondere ein mit hoch sauerstoffhältigem Gasen betriebener Hochofen, in dem ebenso die Bildung von flüssigem Roheisen und Schlacke aus einem Festbett erfolgt eingesetzt werden.

Durch die Anordnung der Sauerstoffdüsen in zwei oder mehreren Düsenebenen gelingt es die Anzahl der möglichen Düsen, die im Schmelzreduktionsaggregat angeordnet werden können zu erhöhen bzw. zu maximieren.

Um die Roheisenproduktion je Schmelzreduktionsaggregat steigern zu können, muss zunächst das Problem von Prozessstörungen und häufiger Düsenschäden gelöst werden, da eine höhere Roheisenproduktion auch eine höhere Schmelzleistung je Düse erfordert. Der Anstieg der Häufigkeit der Düsenschäden hängt damit zusammen, dass durch eine höhere Schmelzleistung je Düse die Roheisen- und Schlackenflüsse zunehmen, die wiederum zu einer Beschädigung oder Störung der Düsen führen können.

Die Sauerstoffdüsen können am Umfang des Mantels des Schmelzreduktionsaggregates gleich verteilt sein, wobei auch eine Anordnung der Sauerstoffdüsen jeweils in Gruppen, welche über den Umfang verteilt sind, erfolgen kann. Die Sauerstoffdüsen einer Gruppe könnten dann z.B. gemeinsam angesteuert werden.

Erfindungsgemäß kann durch die Anordnung der Sauerstoffdüsen in zumindest zwei Düsenebenen die Anzahl der Sauerstoffdüsen erhöht und damit die Schmelzleistung je Sauerstoffdüse reduziert werden. Durch die versetzte Anordnung der Sauerstoffdüsen auf zumindest zwei Düsenebenen kann eine gegenseitige Beeinträchtigung bzw. Beschädigung der Sauerstoffdüsen in den Düsenebenen vermieden werden. Die direkte übereinanderliegende Anordnung von Düsen zweier Düsenebenen würde dazu führen, dass darüberliegende Sauerstoffdüsen durch die Gasströmung darunterliegender Sauerstoffdüsen beschädigt würden. Darüber hinaus besteht auch die Gefahr, dass die unteren Sauerstoffdüsen vom Roheisen- und Schlackenfluss aus darüberliegenden Sauerstoffdüsen beeinträchtigt oder sogar beschädigt werden könnten. Durch die erfindungsgemäße Anordnung ist es möglich die Anzahl der Sauerstoffdüsen und damit die Schmelzleistung des Schmelzreduktionsaggregats insgesamt zu erhöhen, ohne das Risiko höherer Düsenschäden, die eine geringere Verfügbarkeit der Anlage zur Folge hätten. Die Düsenebenen sind parallel zueinander angeordnet, wobei die Düsenebenen normal zur üblicherweise vertikal stehenden Achse des Schmelzreduktionsaggregats stehen. Zudem sind die Düsenebenen derart angeordnet, dass sich die Sauerstoffdüsen im Bereich des Festbettes, das sich im Schmelzreduktionsaggregat bildet, befinden.

Gemäß einer vorteilhaften Ausgestaltung des erfindungsgemäßen Schmelzreduktionsaggregats ist der vertikale Abstand zwischen den Düsenebenen, insbesondere der vertikale Abstand zwischen den Austrittsöffnungen der Sauerstoffdüsen, kleiner oder maximal gleich dem horizontalen Abstand zwischen den Düsen ist. Ein möglichst geringer Abstand der Düsenebenen hat den Vorteil, dass eine gegenseitige Beschädigung der Düsen vermieden wird. Vorteilhaft ist es dabei einen möglichst kleinen Abstand zwischen den Düsenebenen einzustellen. Dies kann z.B. durch einen vergrößerten horizontalen Abstand zwischen den Düsen erzielt werden. Insbesondere kommt es dabei auf den Abstand der Austrittspunkte des Sauerstoffs aus den Sauerstoffdüsen im Inneren des Schmelzreduktionsaggregats an.

Nach einer weiteren möglichen Ausgestaltung des erfindungsgemäßen Schmelzreduktionsaggregats weist zumindest eine der Düsen gegenüber der Horizontalen eine, insbesondere in einem Winkel von 0 bis 16°, bevorzugt 4-12°, nach unten gerichtete, Neigung der Düsenachsen auf.

Durch die nach unten gerichtete Neigung der Düsenachsen bildet sich vor der Sauerstoffdüse eine Gasblase, die als Raceway bezeichnet wird und welche im Vergleich zum Sauerstoffaustritt aus der Sauerstoffdüse tiefer liegt als bei waagrechter Düsenachse. Damit liegt auch das Niveau der sich in diesem Bereich bildenden Flüssigkeiten (z.B. Roheisen, Schlacke) in der Gasblase und damit tiefer als die Sauerstoffdüse, sodass Schäden an der Sauerstoffdüse nahezu ausgeschlossen werden können, da der Sauerstoff nicht direkt in die Flüssigkeit geblasen wird, sodass auch keine Blasen in der Flüssigkeit gebildet werden.

Eine vorteilhafte Ausgestaltung des erfindungsgemäßen Schmelzreduktionsaggregats sieht vor, dass zumindest zwei der Düsen, die auf zwei verschiedenen Düsenebenen angeordnet sind, unterschiedliche, insbesondere nach unten gerichtete, Neigungen der Düsenachsen aufweisen. Damit ist es möglich die sich bildenden Raceways hinsichtlich ihrer Position relativ zu den Sauerstoffdüsen festzulegen und gegebenenfalls an die Sauerstoffmengen anzupassen.

Erfindungsgemäß weist zumindest eine Düse einer Düsenebene gegenüber der Horizontalen eine geringere Neigung der Düsenachse, insbesondere 0-15°, als zumindest eine Düse einer darüberliegenden Düsenebene, insbesondere 6-25°, auf. Durch die Abstimmung der Neigungswinkel zwischen den Düsenebenen kann insgesamt eine homogene Schmelzleistung der Sauerstoffdüsen eingestellt und eine gegenseitige negative Beeinflussung der Sauerstoffdüsen durch einen möglichst geringen vertikalen Abstand im Inneren des Schmelzreduktionsaggregats vermieden werden. Dabei ist es insbesondere auch möglich die Neigungswinkel bei den Sauerstoffdüsen anzupassen, die z.B. für die Eindüsung von Feinkohle Verwendung finden.

Gemäß einer speziellen Ausgestaltung des erfindungsgemäßen Schmelzreduktionsaggregats weisen alle Sauerstoffdüsen einer Düsenebene jeweils gegenüber der Horizontalen dieselbe, insbesondere nach unten gerichtete, Neigung der Düsenachse auf. Die einheitliche Ausrichtung der Sauerstoffdüsen hat den Vorteil, dass Montageelemente, wie z.B. Düsenträger, gleich ausgeführt werden können. Weiters kann damit eine weitgehend gleichmäßige Schmelzleistung über den Umfang des Schmelzreduktionsaggregats erzielt werden.

Eine besonders vorteilhafte Ausgestaltung des erfindungsgemäßen Schmelzreduktionsaggregats sieht vor, dass alle Sauerstoffdüsen derart angeordnet sind, dass sich die aus den Sauerstoffdüsen austretenden bzw. durch den Sauerstoff gebildeten Gas- und/ oder Flüssigkeitsströmungen sich nicht gegenseitig überlappen. Beim Betrieb der Sauerstoffdüsen treten einerseits Gasströmungen aber auch Roheisen und Schlackenflüsse auf. Diese dürfen keine Schäden an den anderen Sauerstoffdüsen verursachen bzw. dürfen sich diese Flüsse bzw. Strömungen nicht gegenseitig überlagern oder beeinflussen. Aufgrund der bekannten Betriebsparameter können die Sauerstoffdüsen derart angeordnet werden, dass es im Betriebsparameterbereich zu keinen Überlagerungen bzw. Überlappungen oder gegenseitigen Beeinflussungen kommt.

Es kann auch eine geringfügige Überlappung der Gas- und/ oder Flüssigkeitsströmungen zugelassen werden, ohne dass es zu Düsenschäden kommt. Dies kann durch Betriebsversuche eingestellt werden.

Nach einer vorteilhaften Ausgestaltung der erfindungsgemäßen Vorrichtung werden die Anordnung der Sauerstoffdüsen in zumindest zwei Düsenebenen und die Neigung der Düsenachsen derart gewählt, dass ein minimaler vertikaler Abstand zwischen den Düsenspitzen eingestellt wird. Durch den minimalen Abstand der Düsenspitzen kann wiederum die Gefahr der gegenseitigen Beschädigung von Sauerstoffdüsen verringert werden. Dabei werden die Punkte der Sauerstoffdüsen, an denen der Sauerstoff aus der Sauerstoffdüse austritt, möglichst eng nebeneinander positioniert und damit gegenseitige Schäden ausgeschlossen.

Die Aufgabe wird weiters durch das erfindungsgemäße Verfahren dadurch gelöst, dass die Zufuhr des sauerstoffhältigen Gases oder Sauerstoff in das Schmelzreduktionsaggregat über die Sauerstoffdüsen erfolgt, die in zumindest zwei voneinander, insbesondere in vertikaler Richtung, beabstandeten und parallel zueinander angeordneten Düsenebenen und horizontal verteilt über den Umfang des Mantels des Schmelzreduktionsaggregats angeordnet sind und wobei die Sauerstoffdüsen unterschiedlicher Düsenebenen jeweils versetzt zueinander angeordnet sind. Durch die vorteilhafte Anordnung kann die Anzahl der Sauerstoffdüsen erhöht werden und dabei die Roheisenproduktion erheblich gesteigert werden, ohne dabei das Risiko einer geringeren Verfügbarkeit des Verfahrens eingehen zu müssen. Aufgrund der erfindungsgemäßen Anordnung können die Sauerstoffdüsen mit geringeren Schmelzleistungen je Sauerstoffdüse betrieben werden, wodurch wiederum die Verfügbarkeit bzw. die Wahrscheinlichkeit von Düsenstörungen reduziert wird.

Vorteilhaft überlappen sich die aus den Sauerstoffdüsen austretenden bzw. durch das sauerstoffhältige Gas oder den Sauerstoff gebildeten Gas- und/ oder Flüssigkeitsströmungen nicht gegenseitig. Damit wird im Betrieb sichergestellt, dass keine Düsenschäden auftreten und eine optimale Schmelzleistung erzielt wird. Dies ist insbesondere auch beim Eintrag von Feinkohle über die Sauerstoffdüsen relevant, da damit wiederum Kohle eingespart werden kann ohne die Roheisenmenge zu reduzieren.

Bei übereinander angeordneten Sauerstoffdüsen strömt die sich an einer oberen Sauerstoffdüse gebildete Flüssigkeit über die untere Sauerstoffdüse und belastet bzw. überlastet das Festbett vor der Sauerstoffdüse zusätzlich, da der Lückengrad im Festbett für eine Drainage unzureichend ist, sodass es zu einem Rückstau von Flüssigkeit in diesem Bereich kommt. Das Gas der unteren Sauerstoffdüse strömt an der oberen Sauerstoffdüse vorbei. Beides kann zu massiven Prozessstörungen und zu erhöhten Düsenschäden führen. Bei versetzter Anordnung könnten unter gewissen Umständen noch immer analoge negative Effekte auftreten. Sobald aber die unteren Sauerstoffdüsen geneigt angeordnet sind und die oberen, relativ zu den unteren Sauerstoffdüsen zwischen diesen angeordnet und stärker geneigt sind, ergibt sich ein geringer vertikaler Abstand, wobei die Strömungen der Flüssigkeiten und der Gase die Sauerstoffdüsen gegenseitig nicht mehr stören.

Erfindungsgemäß wird die über zumindest in zwei Düsenebenen angeordneten Sauerstoffdüsen eingebrachte Sauerstoffmenge derart eingestellt, dass die sich bildenden Gas- und/ oder Flüssigkeitsströmungen keine Sauerstoffdüsen berühren. Durch die erfindungsgemäße Anordnung der Sauerstoffdüsen und die aufgrund der Gesamtzahl der Sauerstoffdüsen ergebende spezifische Schmelzleistung und damit spezifische Sauerstoffmenge je Sauerstoffdüse können einerseits die Düsenanordnung und die Gasströmungen bzw. die Roheisen- und Schlackenströme aufeinander abgestimmt werden, sodass die Sauerstoffdüsen nicht beschädigt oder in Ihrem Betrieb eingeschränkt werden. Die Gas- und/ oder Flüssigkeitsströmungen einer Sauerstoffdüse einer Düsenebene dürfen die Sauerstoffdüsen einer anderen Düsenebene nur insoweit beeinflussen, dass es nicht zu Prozessstörungen oder Düsenschäden kommt. Ein weiterer positiver Effekt ergibt sich dadurch, dass die Gasströmung der oberen Düsenebene die Gasströmung der unteren Ebenen stärker zur Mitte des Schmelzreduktionsaggregats hinablenkt und sich dadurch der aktive Querschnitt des Festbettes vergrößert. Daraus resultierende niedrigere Gasgeschwindigkeiten führen zu einem stabileren Betrieb. In Umfangsrichtung wird durch die höhere mögliche Düsenzahl der Energieeintrag besser verteilt und der inaktive Bereich zwischen den Düsen verringert, wobei eine bessere Gasverteilung, geringere lokale Gasgeschwindigkeiten, eine bessere Verteilung der Flüssigkeiten und daraus eine Leistungssteigerung hinsichtlich der Roheisenmenge, eine verbesserte Prozessstabilität und Produktqualität erzielt wird.

### KURZE BESCHREIBUNG DER FIGUREN

Die Erfindung wird anhand schematischer Figuren 1, 2 und 3 beispielhaft und nicht einschränkend erläutert.
Fig.1: Senkrechter Schnitt durch ein als Einschmelzvergaser ausgebildetes Schmelzreduktionsaggregat
Fig. 2: Ausschnitt einer Ansicht der Sauerstoffdüsen in montiertem Zustand
Fig. 3: Schematische Darstellungen der Anordnung und der Stoffströme

### WEGE ZUR AUSFÜHRUNG DER ERFINDUNG

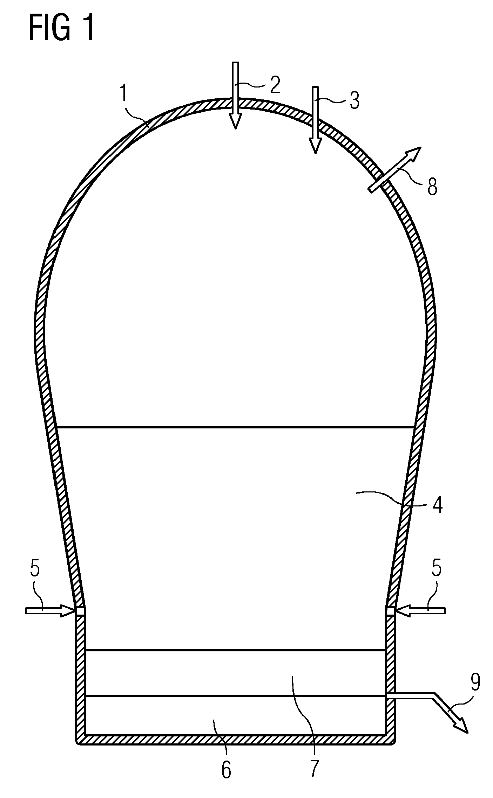

Fig. 1 zeigt einen senkrechten Schnitt durch ein als Einschmelzvergaser 1 ausgebildetes Schmelzreduktionsaggregat, dem von oben mittels Chargiervorrichtungen und feste Kohlenstoffträger 2 und eisenhältige Einsatzstoffe 3 aufgegeben werden. Die Kohlenstoffträger 2 werden bevorzugterweise von stückiger Kohle und/oder Koks und/oder Kohlebriketts gebildet, die eisenhältigen Einsatzstoffe bevorzugterweise von teil- und/oder fertigreduziertem, stückigem und/oder feinteilchenförmigem Eisenschwamm.

Vor dem Einschmelzvergaser 1 ist bzw. sind üblicherweise ein oder mehrere hier nicht dargestellte Reduktionsaggregate, beispielsweise Direktreduktionsschachte oder Wirbelschichtaggregate, angeordnet, in welchen eisenoxidhältiges Material mittels dem im Einschmelzvergaser 1 erzeugten Reduktionsgas zu dem teil- und/oder fertigreduzierten Eisenschwamm reduziert wird. Dieser Eisenschwamm wird aus dem Reduktionsschacht gefördert und dem Einschmelzvergaser 1 aufgegeben. Das Schmelzreduktionsaggregat kann auch als Hochofen ausgeführt werden. Hier sind die Reduktionszone und die Schmelzzone in einem Aggregat angeordnet, sodass das Schmelzreduktionsaggregat durch den unteren Teil des Hochofens gebildet wird während im oberen Teil des Hochofens die Vorreduktion erfolgt.

In der Einschmelzvergasungszone eines Einschmelzvergasers 1 bildet sich ein von den festen Kohlenstoffträgern 2 gebildetes Festbett 4 aus. Ebenso bildet sich in einem Hochofen ein Festbett im Bereich der Sauerstoffdüsen aus. In dieses Festbett 4 wird über Sauerstoffdüsen 5 ein sauerstoffhältiges Gas, bevorzugterweise technischer Sauerstoff oder sauerstoffhältige Gase, eingeblasen. Dabei werden unter gleichzeitiger Bildung eines Reduktionsgases die eisenhaltigen Einsatzstoffe 3 zu flüssigem Roheisen 6 und flüssiger Schlacke 7 geschmolzen. Das gebildete Reduktionsgas wird über eine Reduktionsgas-Ableitung 8 aus dem Einschmelzvergaser abgezogen.

Flüssiges Roheisen 6 und flüssige Schlacke 7 sammeln sich in einem unteren Abschnitt des Einschmelzvergasers 1 und werden über einen Abstich 9 abgestochen. Sauerstoff oder sauerstoffhältiges Gas wird zunächst über eine nicht dargestellte Zuleitung, wie z.B. über eine den Einschmelzvergaser 1 kreisringförmig umgebenden Ringleitung zugeführt. In ähnlicher Weise wird ein Hochofen über eine Ringleitung versorgt. Von der Zuleitung aus können über nicht dargestellte Gasleitungen die Sauerstoffdüsen 5 versorgt werden.

Die Sauerstoffdüsen 5 sind dabei im äußeren Bereich des Mantels des Einschmelzvergasers 1 angeordnet und über einen Bohrungskanal mit dem Inneren des Einschmelzvergasers 1 verbunden. Ausgehend vom Abstich 9, dessen Position zumeist von der Höhe der Gießhalle und den Rinnen zum Abtransport des Roheisens und der Schlacke definiert ist, wird die sogenannte Herdhöhe (Abstand zwischen Abstich 9 und den Sauerstoffdüsen 5) festgelegt. Dieser Bereich dient der Speicherung der entstehenden Flüssigkeiten (Roheisen und Schlacke) bzw. dem Ablauf der metallurgischen Reaktionen. Oberhalb der Sauerstoffdüsen 5 befindet sich das durchgaste Charbett (bewegtes Festbett) bis zum Dome, welcher einen Gasraum zur Konditionierung bildet.

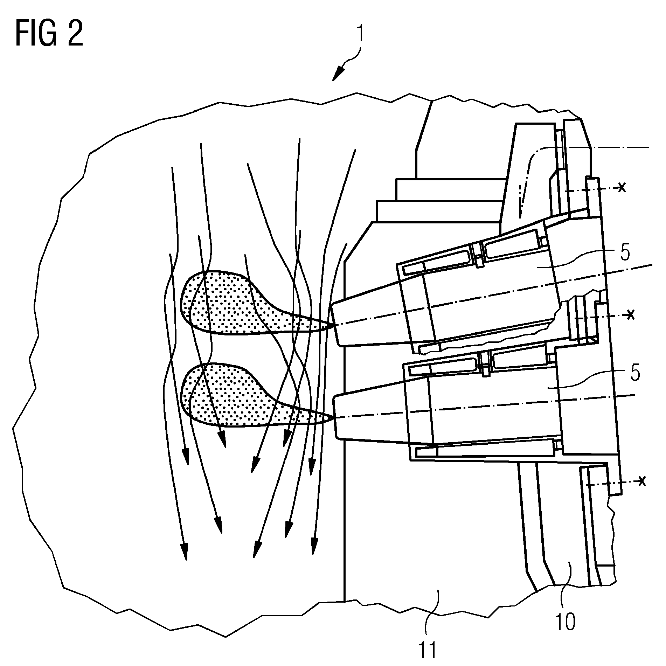

Fig. 2 zeigt in einer schematischen Darstellung die Anordnung von Sauerstoffdüsen 5 und in einem Einschmelzvergaser 1, wobei die Sauerstoffdüsen 5 im Mantel 10 des Einschmelzvergasers 1 angeordnet sind. Die Düsenträger, die der Montage der Sauerstoffdüsen 5 am Mantel des Einschmelzvergasers 1 dienen, sind hier nur schematisch angedeutet. Die Sauerstoffdüsen 5 reichen durch eine angedeutete Feuerfestschicht 11 in den Prozessraum des Einschmelzvergasers 1. Die Düsenträger können auch mit einer anderen Neigung als die Sauerstoffdüsenachsen ausgeführt werden. Dies ist im Zusammenhang mit der Mantelneigung des Einschmelzvergasers oder der Mantelneigung eines Hochofens zu sehen. Zum Beispiel kann eine Mantelneigung von 8° und eine Neigung der Düsenachse ebenfalls von 8° genutzt werden, um eine rotationssymmetrische Ausführung der Dicht- und Kegelsitze für den Einbau der Sauerstoffdüsen und der Düsenträger im Mantel des Aggregates genutzt werden. Es sind aber auch nicht rotationssymmetrische Lösungen unter bestimmten Mantelgeometrien sinnvoll.

Die Sauerstoffdüsen 5 sind in zwei übereinanderliegenden Düsenebenen angeordnet, jedoch horizontal versetzt zueinander, sodass keine Sauerstoffdüse 5 direkt über einer darunterliegenden Sauerstoffdüse 5 angeordnet ist. Über die Sauerstoffdüsen 5 werden der Sauerstoff und gegebenenfalls auch feine Kohlenstoffträger, wie z.B. Kohlestäube oder Feinkohle, in den Einschmelzvergaser und das hier vorliegende Festbett 4, bestehend aus stückigen Kohlenstoffträgern eingebracht. Dabei wird die für den Betrieb des Einschmelzvergasers 5 nötige Sauerstoffmenge eingebracht, sodass die erforderliche Energie bereitgestellt, die Kohle vergast und damit ein Reduktionsgas gebildet wird. Je Sauerstoffdüse 5 wird also eine Schmelzleistung erbracht, wobei sich jeweils ein Roheisen- und Schlackenstrom und ein Gasstrom bilden.

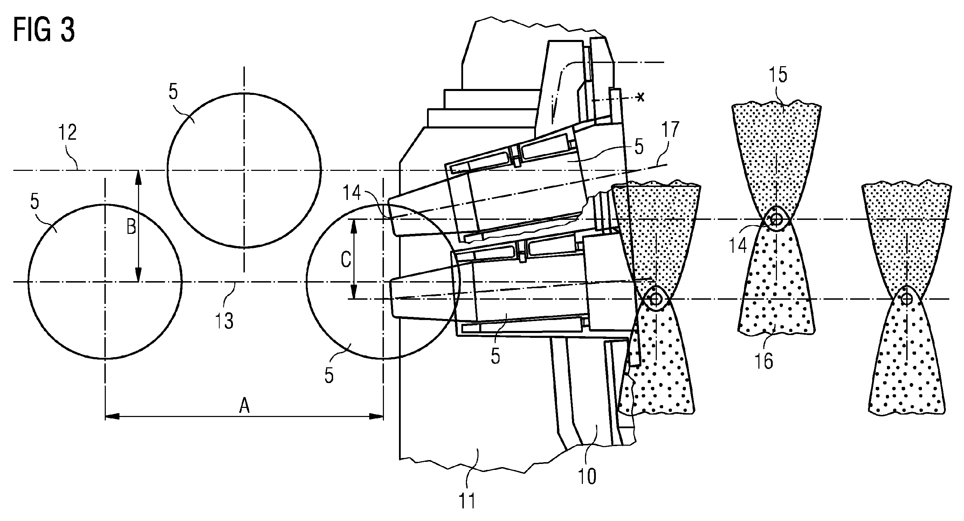

Dies ist in Figur 3 schematisch dargestellt. Eine mögliche Anordnung der Sauerstoffdüsen am Umfang des Mantels 10 des Einschmelzvergasers 1 ist schematisch dargestellt. Eine Gruppe von Sauerstoffdüsen ist jeweils auf den Düsenebenen 12 und 13 angeordnet. Dabei ist es zweckmäßig die Sauerstoffdüsen gleichmäßig verteilt über den Umfang des Mantels 10 anzuordnen. Die Anzahl der Sauerstoffdüsen wird im Wesentlichen durch den Umfang bzw. den Durchmesser des Einschmelzvergasers 1 und die gewünschte Roheisenproduktionsmenge festgelegt. Der Abstand A zwischen zwei Sauerstoffdüsen einer Düsenebene wird derart gewählt, dass die Anzahl der Sauerstoffdüsen in den beiden Düsenebenen 12 und 13 maximiert wird, wobei der Abstand B zwischen den Düsenebenen 12 und 13 möglichst klein gehalten wird, um eine gegenseitige Störung bzw. Beschädigungen der Sauerstoffdüsen zu vermeiden. Zumeist wird der Abstand B geringer als der Abstand A gewählt.

Um einen störungsfreien Betrieb zu erzielen, kommt es vor allem auf den Abstand C zwischen den sogenannten Düsenspitzen 14 an, also dem vertikalen Abstand zwischen den Austrittsöffnungen der Sauerstoffdüsen 5 zweier Düsenebenen im Inneren des Schmelzreduktionsaggregates.

Durch die erfindungsgemäße Anordnung der Sauerstoffdüsen 5 kann eine deutlich größere Anzahl verwirklicht werden, ohne dabei Nachteile hinsichtlich des Betriebes der Sauerstoffdüsen bzw. der Anlagenverfügbarkeit eingehen zu müssen. Vorteilhaft ist dabei auch, dass die Düsenträger einfacher am Mantel 10 des Einschmelzvergasers 1 montiert werden können, sodass auch weniger komplexe und kostengünstigere Düsenmontagevorrichtungen bzw. Düsenträger realisiert werden können.

Die Achsen 17 der Sauerstoffdüsen 5 sind gegenüber der Horizontalen geneigt ausgeführt. Die Neigungswinkel der Achsen einer Düsenebene können unterschiedlich ausgeführt sein, häufig wird aber ein einheitlicher Neigungswinkel für alle Sauerstoffdüsen einer Düsenebene gewählt. Der Neigungswinkel der Achsen der Sauerstoffdüsen einer darüberliegenden Düsenebene wird vorteilhaft größer als der einer darunterliegenden Düsenebene ausgeführt. Damit wird erreicht, dass die Austrittsöffnungen der Sauerstoffdüsen 5 eng beieinander liegen.

Der zugeführte Sauerstoff und gegebenenfalls Feinkohle gelangen über die Düsenspitzen 14 in den Prozessraum des Einschmelzvergasers, wobei je Sauerstoffdüse 5 ein im Wesentlichen nach oben gerichteter Gasstrom 15 und ein nach unten gerichteter Roheisen- und Schlackenstrom 16 erzeugt wird. Diese Ströme sind schematisch im rechten Teil der Fig. 3 dargestellt, wobei ersichtlich ist, dass diese Ströme nicht andere darüber oder darunterliegende Sauerstoffdüsen berühren oder treffen. Zudem überlappen sich diese Ströme auch nicht gegenseitig. Die Anzahl der Düsenebenen wird nach erforderlicher Schmelzleistung gewählt bzw. maximiert und könnte auch auf 3 oder mehr Düsenebenen erhöht werden.

## Patentansprüche

1. Schmelzreduktionsaggregat (1) mit Chargiervorrichtungen für feste Kohlenstoffträger (2), wie stückige Kohle, und eisenhaltige Einsatzstoffe (3), wie teil- und/oder fertigreduziertem Eisenschwamm, mit einer Einschmelzvergasungszone, welche ein von den festen Kohlenstoffträgern (2) und den eisenhaltigen Einsatzstoffen (3) gebildetes Festbett (4) enthält, mit einem unteren Abschnitt zur Aufnahme von flüssigem Roheisen (6) bzw. Stahlvormaterial und flüssiger Schlacke (7), mit einem Abstich (9) für flüssige Schlacke und flüssiges Roheisen, mit einer Vielzahl von Sauerstoffdüsen (5), welche im Mantel (10) des Schmelzreduktionsaggregats (1) angeordnet sind, mit Versorgungsleitungen zur Zufuhr von sauerstoffhältigem Gas oder Sauerstoff zu den Sauerstoffdüsen (5), insbesondere einer Ringleitung, welche den Mantel (10) des Schmelzreduktionsaggregats (1) ringförmig umgibt, **dadurch gekennzeichnet**) dass die Vielzahl der Sauerstoffdüsen (5) in zumindest zwei voneinander, insbesondere in vertikaler Richtung, beabstandeten und parallel zueinander angeordneten Düsenebenen und horizontal verteilt über den Umfang des Mantels des Schmelzreduktionsaggregats und in unterschiedlichen Düsenebenen, jeweils versetzt zueinander angeordnet sind, wobei der vertikale Abstand (B) zwischen den Düsenebenen, insbesondere der vertikale Abstand (C) zwischen den Austrittsöffnungen der Sauerstoffdüsen (5), kleiner oder maximal gleich dem horizontalen Abstand (A) zwischen den Sauerstoffdüsen (5) ist.

2. Schmelzreduktionsaggregat nach Anspruch 1, **dadurch gekennzeichnet, dass** zumindest eine der Seuerstoffdüsen (5) gegenüber der Horizontalen eine, insbesondere in einem Winkel von 0 - 25° nach unten gerichtete, Neigung der Düsenachse (17) aufweist.

3. Schmelzreduktionsaggregat nach Anspruch 1 oder 2, **dadurch gekennzeichnet, dass** zumindest zwei der Sauerstoffdüsen (5), die auf zwei verschiedenen Düsenebenen angeordnet sind, unterschiedliche, insbesondere nach unten gerichtete, Neigungen der Düsenachsen (17) aufweisen.

4. Schmelzreduktionsaggregat nach einem der obigen Ansprüche, **dadurch gekennzeichnet, dass** zumindest eine Sauerstoffdüse (5) einer Düsenebene gegenüber der Horizontalen eine geringere Neigung der Düsenachse (17), insbesondere 0-15°, als zumindest eine Sauerstoffdüse (5) einer darüber liegenden Düsenebene, insbesondere 6-25°, aufweist.

5. Schmelzreduktionsaggregat nach einem der obigen Ansprüche, **dadurch gekennzeichnet, dass** alle Sauerstoffdüsen (5) einer Düsenebene jeweils gegenüber der Horizontalen dieselbe, insbesondere nach unten gerichtete, Neigung der Düsenachse (17) aufweisen.

6. Schmelzreduktionsaggregat nach einem der obigen Ansprüche, **dadurch gekennzeichnet, dass** alle Sauerstoffdüsen (5) derart angeordnet sind, dass sich die aus den Sauerstoffdüsen (5) austretenden bzw. durch den Sauerstoff gebildeten Gas-(15) und/oder Flüssigkeitsströmungen (16) nicht gegenseitig überlappen.

7. Schmelzreduktionsaggregat nach Anspruch 1, **dadurch gekennzeichnet, dass** die Anordnung der Düsen in zumindest zwei Düsenebenen und die Neigung der Düsenachsen derart gewählt werden, dass ein minimaler vertikaler Abstand zwischen den Düsenspitzen im Inneren des Schmelzreduktionsaggregats eingestellt wird.

8. Verfahren zum Betrieb eines Schmelzreduktionsaggregats, in dem eisenhaltige Einsatzstoffe, wie teil- und/oder fertigreduzierter Eisenschwamm, unter Zugabe von festen Kohlenstoffträgern und Zufuhr eines sauerstoffhältigen Gases oder Sauerstoff über eine Vielzahl von über den Umfang des Srhmeizreduktionsaggregat verteilten Sauerstoffdüsen in einem aus den festen Kohlenstoffträgern gebildeten Festbett gegebenenfalls fertig reduziert und unter gleichzeitiger Bildung eines CO- und H₂-hältigen Reduktionsgases zu flüssigem Roheisen oder Stahlvormaterial erschmolzen werden, wobei das sauerstoffhältige Gas über Gasleitungen zu den Sauerstoffdüsen geführt wird, von wo aus das sauerstoffhältige Gas in das Festbett eingeblasen wird, **dadurch gekennzeichnet, dass** die Zufuhr des sauerstoffhältigen Gases in das Schmelzreduktionsaggregat Über die Sauerstoffdüsen erfolgt, die in zumindest zwei voneinander, insbesondere in vertikaler Richtung, beabstandeten und parallel zueinander angeordneten Düsenebenen und horizontal verteilt über den Umfang des Mantels des Schmelzreduktionsaggregats angeordnet sind und wobei die Düsen unterschiedlicher Düsenebenen jeweils versetzt zueinander angeordnet sind, wobei der vertikale Abstand (B) zwischen den Düsenebenen, insbesondere der vertikale Absland (C) zwischen den Austrittsöffnungen der Sauerstoffdüsen, kleiner oder maximal gleich dem horizontalen Abstand (A) zwischen den Sauerstoffdüsen ist.

9. Verfahren nach Anspruch 6, **dadurch gekennzeichnet, dass** die aus den Düsen austretenden bzw. durch das sauerstoffhältige Gas oder den Sauerstoff gebildeten Gas- und/ oder Flüssigkeitsströmungen sich nicht gegenseitig überlappen.

10. Verfahren nach Anspruch 8 oder 9, **dadurch gekennzeichnet, dass** die, über zumindest in zwei Düsenebenen angeordneten Düsen eingebrachte Sauerstoffmenge derart eingestellt wird, dass die sich bildenden Gas- und/ oder Flüssigkeitssfrömungen keine Düsen berühren, wobei die Gasströmung der oberen Düsenebenen die Gasströmung der unteren Ebenen stärker zur Mitte des Schmetzreduktionsaggregats hin ablenkt und sich dadurch der aktive Querschnitt des Festbettes vergrößert.

## Claims

1. Melting reduction assembly (1) having loading devices for solid carbon carriers (2) such as pieces of coal, and ferrous input materials (3), for example, partly reduced and/or fully reduced sponge iron, having a melting gasification zone which comprises a packed bed (4) formed by the solid carbon carriers (2) and the ferrous input materials (3), having a lower section for receiving liquid pig iron (6) or raw steel material and liquid slag (7), having a tap (9) for liquid slag and liquid pig iron, having a plurality of oxygen nozzles (5) arranged in the shell (10) of the melting reduction assembly (1) and supply lines for feeding oxygen-containing gas or oxygen to the oxygen nozzles (5), in particular a ring circuit which surrounds the shell (10) of the melting reduction assembly (1) in a ring form, **characterised in that** the plurality of oxygen nozzles (5) are arranged distributed in at least two nozzle planes arranged spaced apart from one another, in particular in the vertical direction, and arranged parallel to one another, said nozzles being horizontally distributed round the periphery of the shell of the melting reduction assembly and in different nozzle planes, each arranged offset to one another, wherein the vertical spacing (B) between the nozzle planes, in particular the vertical spacing (C) between the exit openings of the oxygen nozzles (5) is smaller than, or at most equal to, the horizontal spacing (A) between the oxygen nozzles (5).

2. Melting reduction assembly according to claim 1, **characterised in that** at least one of the oxygen nozzles (5) has an inclination angle of the nozzle axis (17) relative to the horizontal in particular in the range of 0° to 25°, directed downwardly.

3. Melting reduction assembly according to claim 1 or 2, **characterised in that** at least two of the oxygen nozzles (5) which are arranged in two different nozzle planes have different, in particular downwardly directed, inclination of the nozzle axes (17).

4. Melting reduction assembly according to one of the preceding claims, **characterised in that** at least one oxygen nozzle (5) of a nozzle plane has a smaller inclination of the nozzle axis (17) relative to the horizontal, in particular in the range of 0° to 15°, than at least one oxygen nozzle (5) of a nozzle plane lying thereabove, in particular in the range of 6° to 25°.

5. Melting reduction assembly according to one of the preceding claims, **characterised in that** all the oxygen nozzles (5) of one nozzle plane have the same, in particular downwardly directed, inclination of the nozzle axis (17) thereof in each case, relative to the horizontal.

6. Melting reduction assembly according to one of the preceding claims, **characterised in that** all the oxygen nozzles (5) are arranged such that the gas stream (15) and/or fluid flow (16) emerging from the oxygen nozzles (5) or formed by the oxygen do not overlap one another.

7. Melting reduction assembly according to claim 1, **characterised in that** the arrangement of the nozzles in at least two nozzle planes and the inclination of the nozzle axes is selected such that a minimum vertical spacing is set between the nozzle tips in the interior of the melting reduction assembly.

8. Method for operating a melting reduction assembly, wherein ferrous input materials, for example, partly and/or fully reduced sponge iron is possibly fully reduced with the addition of solid carbon carriers and the supply of an oxygen-containing gas or of oxygen via a plurality of oxygen nozzles which are arranged distributed round the periphery of the melting reduction assembly in a packed bed formed of solid carbon carriers, and are melted, with simultaneous formation of a reducing gas containing CO and H₂, to liquid pig iron or raw steel material, wherein the oxygen-containing gas is fed via gas lines to the oxygen nozzles, from where the oxygen-containing gas is blown into the packed bed, **characterised in that** the feeding of the oxygen-containing gas into the melting reduction assembly is carried out via the oxygen nozzles which are situated in at least two nozzle planes arranged spaced apart from one another, in particular in the vertical direction, and arranged parallel to one another, said nozzles being horizontally distributed round the periphery of the shell of the melting reduction assembly and wherein the nozzles of different nozzle planes are arranged offset relative to one another, wherein the vertical spacing (B) between the nozzle planes, in particular the vertical spacing (C) between the exit openings of the oxygen nozzles (5) is smaller than, or at most equal to, the horizontal spacing (A) between the oxygen nozzles (5).

9. Method according to claim 8, **characterised in that** the gas streams and/or fluid flows emerging from the nozzles and the gas streams and/or fluid flows formed by the oxygen-containing gas or the oxygen do not overlap one another.

10. Method according to claim 8 or 9, **characterised in that** the quantity of oxygen introduced via the nozzles arranged in at least two nozzle planes is set such that the gas streams and/or fluid flows which form do not make contact with any nozzles, wherein the gas stream of the upper nozzle plane deflects the gas stream of the lower nozzle plane more strongly toward the centre of the melting reduction assembly and the active cross-section of the packed bed is thereby increased.

## Revendications

1. Unité de réduction par fusion (1) avec des dispositifs de chargement pour des supports carbone (2) solides, comme du charbon en morceaux, et des matières premières contenant du fer (3), comme de l'éponge de fer partiellement ou entièrement réduite, avec une zone de gazéification de fonte, qui contient un lit fixe (4) formé à partir des supports carbone solides (2) et des matières premières contenant du fer (3), avec une section inférieure destinée à accueillir de la fonte brute liquide (6) ou bien un prématériau d'acier et du laitier liquide (7), avec une coulée (9) pour du laitier liquide et de la fonte brute liquide, avec une pluralité de buses à oxygène (5), qui sont agencées dans l'enveloppe (10) de l'unité de réduction par fusion (1), avec des conduites d'alimentation destinées à l'acheminement de gaz contenant de l'oxygène ou d'oxygène vers les buses à oxygène (5), en particulier une conduite annulaire, qui entoure de manière annulaire l'enveloppe (10) de l'unité de réduction par fusion (1), **caractérisée en ce que** la pluralité de buses à oxygène (5) sont agencées de manière respectivement décalée les unes par rapport aux autres dans au moins deux plans de buse agencés de manière parallèle l'un à l'autre et espacés l'un de l'autre, en particulier dans le sens vertical, et sont agencées horizontalement réparties sur la périphérie de l'enveloppe de l'unité de réduction par fusion et dans des plans différents, l'espacement vertical (B) entre les plans de buse, en particulier l'espacement vertical (C) entre les ouvertures de sortie des buses à oxygène (5), étant inférieur ou égal à l'espacement horizontal (A) entre les buses à oxygène (5).

2. Unité de réduction par fusion selon la revendication 1, **caractérisée en ce qu'**au moins une des buses à oxygène (5) présente une inclinaison de l'axe de buse (17) vers le bas, en particulier selon un angle compris entre 0 et 25°, par rapport à l'horizontale.

3. Unité de réduction par fusion selon la revendication 1 ou 2, **caractérisée en ce qu'**au moins deux des buses à oxygène (5), qui sont agencées dans deux plans de buse différents, présentent des inclinaisons différentes des axes de buse (17), en particulier orientées vers le bas.

4. Unité de réduction par fusion selon l'une quelconque des revendications précédentes, **caractérisée en ce qu'**au moins une buse à oxygène (5) d'un plan de buse présente par rapport à l'horizontale une inclinaison de l'axe de buse (17) plus faible, en particulier comprise entre 0 et 15°, que celle d'au moins une buse à oxygène (5) d'un plan de buse situé au-dessus, en particulier comprise entre 6 et 25°.

5. Unité de réduction par fusion selon l'une quelconque des revendications précédentes, **caractérisée en ce que** toutes les buses à oxygène (5) d'un plan de buse présentent respectivement par rapport à l'horizontale la même inclinaison de l'axe de buse (17), en particulier orientée vers le bas.

6. Unité de réduction par fusion selon l'une quelconque des revendications précédentes, **caractérisée en ce que** toutes les buses à oxygène (5) sont agencées de telle manière que les courants de gaz (15) et/ou de liquide (16), sortant des buses à oxygène (5) ou bien formés grâce à l'oxygène, ne se chevauchent pas mutuellement.

7. Unité de réduction par fusion selon la revendication 1, **caractérisée en ce que** l'agencement des buses dans au moins deux plans de buse et l'inclinaison des axes de buse sont choisis de telle manière qu'un espacement vertical minimal entre les pointes de buse est ajusté à l'intérieur de l'unité de réduction par fusion.

8. Procédé d'exploitation d'une unité de réduction par fusion, dans lequel des matières premières contenant du fer, comme de l'éponge de fer partiellement et/ou complètement réduite, avec ajout de supports carbone solides et acheminement d'un gaz contenant de l'oxygène ou d'oxygène par l'intermédiaire d'une pluralité de buses à oxygène réparties sur la périphérie de l'unité de réduction par oxygène, sont réduites de manière éventuellement complète dans un lit fixe formé à partir des supports carbone solides et sont fondues avec formation simultanée d'un gaz de réduction contenant du CO et du H₂ pour donner une fonte brute liquide ou un prématériau d'acier, le gaz contenant de l'oxygène étant guidé par l'intermédiaire de conduites de gaz vers les buses à oxygène, à partir desquelles le gaz contenant de l'oxygène est soufflé dans le lit fixe, **caractérisé en ce que** l'acheminement du gaz contenant de l'oxygène dans l'unité de réduction par fusion se fait par l'intermédiaire des buses à oxygène, qui sont agencées dans au moins deux plans de buse parallèles l'un à l'autre et espacés l'un de l'autre, en particulier dans le sens vertical, et qui sont agencées horizontalement réparties sur la périphérie de l'enveloppe de l'unité de réduction par fusion et dans lequel les buses de plans de buse différents sont agencées de manière respectivement décalée les unes par rapport aux autres, dans lequel l'espacement vertical (B) entre les plans de buse, en particulier l'espacement vertical (C) entre les ouvertures de sortie des buses à oxygène, est inférieur ou au plus égal à l'espacement horizontal (A) entre les buses à oxygène.

9. Procédé selon la revendication 8, **caractérisé en ce que** les courants de gaz et/ou de liquide sortant des buses ou bien formés grâce au gaz contenant de l'oxygène ou à l'oxygène, ne se chevauchent pas mutuellement.

10. Procédé selon la revendication 8 ou 9, **caractérisé en ce que** les quantités d'oxygène introduites par l'intermédiaire de buses agencées dans au moins deux plans de buse sont ajustées de telle manière que les courants de gaz et/ou de liquide se formant ne viennent en contact avec aucune buse, dans lequel le courant de gaz du plan de buse supérieur dévie le courant de gaz du plan inférieur plus fortement vers le milieu de l'unité de réduction par fusion et la section transversale active du lit fixe s'en trouve agrandie.
